# FASCICULE DE BREVET EUROPEEN

(11) **EP 0 798 910 B1**
(45) Date de publication et mention de la délivrance du brevet: **26.11.2003**
(21) Numéro de dépôt: 97410038.0
(22) Date de dépôt: 25.03.1997
(51) Int. Cl.: H04M 3/18

(54) **Protection contre les surtensions d'une interface de lignes téléphoniques**
Überspannungsschutz für eine Fernsprechleitungsschnittstelle
Overvoltage protection for telephone line interface

(30) Priorité: 26.03.1996 FR 9604068
(43) Date de publication de la demande: 01.10.1997
(73) Titulaire: STMicroelectronics S.A., 92120 Montrouge (FR)
(72) Inventeur: Bremond, André, 37270 Veretz (FR); Merceron, Philippe, 37210 Vernon sur Brenne (FR)
(74) Mandataire: de Beaumont, Michel

(56) Documents cités:
- US-A- 4 480 152
- US-A- 4 849 846
- ELEKTRONIK, vol. 40, no. 20, 1 Octobre 1991, MUNCHEN, DE, pages 132-138, XP000265904 M. BOLLINGER: "Bodyguards für SLICs"

## Description

La présente invention concerne la protection contre des surcharges électriques de centraux téléphoniques et, plus particulièrement, de l'interface entre une ligne téléphonique et un central. Une telle interface est généralement constituée d'une carte qui reçoit, par exemple, huit lignes téléphoniques et est couramment désigné dans la technique par l'appellation SLIC d'après les termes anglo-saxons Subscriber Line Interface Circuit (circuit d'interface de ligne d'abonné).

Toutefois, bien que la présente invention soit décrite ci-après dans le cadre de cette application, on notera que l'invention prévoit un système de protection qui peut également s'appliquer à la protection d'un ou plusieurs conducteurs électriques reliés à d'autres circuits électriques ou électroniques.

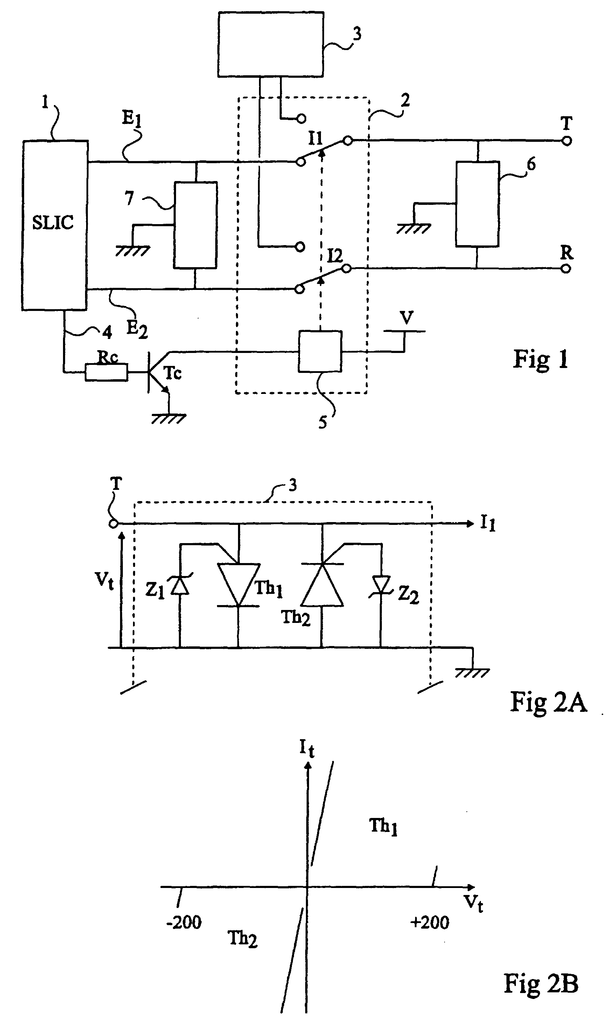

La figure 1 représente un mode de réalisation classique d'un circuit d'interface de ligne d'abonné (SLIC). Entre des conducteurs T et R (pointe et bague ou tip et ring) d'une ligne téléphonique d'abonné et l'interface SLIC 1, on trouve un circuit 2 de relais inverseurs, dits relais de sonnerie, qui sont destinés à commuter la ligne entre deux modes de fonctionnement. Un premier mode de fonctionnement, dit de sonnerie, raccorde les conducteurs T et R, respectivement par des relais I1 et I2, à un générateur de sonnerie 3. Dans un deuxième mode de fonctionnement, dit de parole, les conducteurs T et R sont raccordés par l'intermédiaire des relais I1 et I2 au circuit 1.

Le circuit SLIC 1 gère les deux modes de fonctionnement. Le circuit 1 possède une sortie de commande 4 délivrant un signal à deux états de commande d'un bloc 5 actionnant les relais I1 et I2. La commande du bloc 5 s'effectue généralement par l'intermédiaire d'un transistor Tc dont l'émetteur est raccordé à la masse, dont le collecteur est relié à une entrée de commande du bloc 5 et dont la base est reliée à la borne 4 par l'intermédiaire d'une résistance Rc. Le bloc 5 est alimenté par une tension positive V (généralement de l'ordre de 5 volts).

Le cas échéant, le montage constitué du transistor Tc et de la résistance Rc peut être intégré au circuit SLIC 1.

La protection usuelle du circuit SLIC et du générateur de sonnerie 3 consiste à placer des dispositifs de protection 6 et 7, respectivement, entre la ligne et le circuit de relais 2 et entre le circuit 1 et le circuit 2.

Le dispositif 6 a essentiellement pour rôle de protéger le générateur de sonnerie 3 lorsque les relais I1 et I2 y connectent la ligne (position des contacts non représentée à là figure 1), en connectant l'un ou l'autre des conducteurs T et R à la masse dès que la tension sur la ligne dépasse un seuil déterminé, par exemple, une tension de ± 200 volts. Le choix du seuil de tension est lié au fonctionnement du générateur de sonnerie. En mode sonnerie, une tension alternative appelée signal de sonnerie est appliquée sur la ligne et a une valeur comprise généralement entre 50 et 100 volts efficaces. Le rôle du dispositif 6 est alors d'éliminer toutes les tensions supérieures à la tension crête de sonnerie.

Le dispositif de protection 7 a pour rôle de protéger le circuit SLIC 1 lorsque les contacts du circuit de relais 2 y connectent la ligne (position représentée à la figure 1). Le dispositif 7 est prévu pour se déclencher, c'est-à-dire pour connecter l'un ou l'autre des connecteurs T ou R à la masse, dès que la tension sur la ligne dépasse un seuil déterminé correspondant au niveau de tension normal sur la ligne. En mode parole, le circuit 1 est alimenté par une tension négative généralement comprise entre -30 et -70 volts continus, par exemple -48 volts, référencée à la masse. Cette tension est appelée "tension batterie" et les entrées, respectivement E1 et E2, du circuit 1 côté ligne doivent être protégées contre toutes les tensions positives ainsi que contre toutes les tensions plus négatives que la tension batterie. Un tel mode de réalisation classique d'un circuit d'interface de ligne d'abonné est par exemple connu de la Figure 1 du document ELEKTRONIK, vol. 40, no. 20, 1 Octobre 1991, MUNCHEN, pages 132-138, XP 000265904, M. BOLLINGER "Bodyguards für SLICs".

Les dispositifs de protection 6 et 7 sont généralement des dispositifs dits court-circuitant (crowbar) dont un exemple de réalisation et la caractéristique courant-tension sont respectivement représentés aux figures 2A et 2B.

La figure 2A représente un mode de réalisation classique d'un demi-circuit de protection de type court-circuitant pour un des conducteurs T ou R. A la figure 2A, seule une moitié du dispositif de protection 6 a été représentée dans la mesure où il présente la même structure entre chacun des conducteurs T ou R et la masse.

Pour la partie représentée à la figure 2A (protection du conducteur T), le dispositif 6 comporte un premier thyristor Th1 à gâchette d'anode monté entre le conducteur T et la masse, sa cathode étant raccordée à la masse. La gâchette du thyristor Th1 est reliée à la cathode d'une diode à avalanche Z1 dont l'anode est reliée à la masse. Quand une surtension positive excédant la tension d'avalanche de la diode Z1 arrive sur le conducteur T, la diode Z1 entre en avalanche et entraîne la mise en conduction du thyristor Th1. Le dispositif 6 comporte un deuxième thyristor Th2 à gâchette de cathode monté entre le conducteur T et la masse, son anode étant connectée à la masse. La gâchette du thyristor Th2 est connectée à la masse par l'intermédiaire d'une deuxième diode à avalanche Z2 montée avec une polarité opposée par rapport à la diode à avalanche Z1 associée au thyristor Th1. La diode Z2 entre en avalanche quand une surcharge négative excédant sa tension d'avalanche arrive sur le conducteur T et, par suite, le thyristor Th2 entre en conduction.

Les tensions d'avalanche des diodes Z1 et Z2 sont fixées pour correspondre aux tensions seuils de protection du circuit, par exemple, ± 200 volts.

La figure 2B représente la caractéristique courant-tension d'un circuit de protection tel que représenté à la figure 2A. Cette figure illustre l'allure du courant It dans celui des thyristors Th1 et Th2 qui conduit en fonction de la tension Vt à ses bornes. La partie droite de la courbe correspond à l'action du thyristor Th1 et de la diode Z1, la partie gauche de la courbe correspondant à l'action du thyristor Th2 et de la diode Z2.

Le dispositif de protection 7 entre le SLIC et le circuit 2 est de constitution similaire au dispositif 6 mais avec des seuils de déclenchement différents et non-symétriques, par exemple, 0 et -50 volts. On notera qu'en mode parole, le dispositif 6 est superflu dans la mesure où le dispositif 7 se déclenche le premier.

Un inconvénient d'un système tel que représenté à la figure 1 est que le prix de la protection est élevé du seul fait qu'elle comporte au moins deux dispositifs de protection qu'il faut approvisionner et monter séparément.

Un autre inconvénient d'un tel système est que, si une surtension arrive tandis que les relais I1 et I2 connectent la ligne au circuit SLIC 1, le dispositif de protection 7 entrera en action mais, pendant la durée de la surcharge, un fort courant circule dans les contacts des relais I1 et I2 ce qui risque de les détériorer et rend impossible l'utilisation de relais statiques.

La présente invention vise à pallier les inconvénients des systèmes de protection connus en proposant un nouveau système de protection d'une interface d'abonné qui évite l'apparition de surintensités dans les relais de sonnerie en cas de surcharge.

Plus généralement, l'invention vise à proposer un système de protection de circuits, raccordés à au moins un conducteur par l'intermédiaire d'au moins un relais, et pour lesquels on souhaite disposer de seuils de protection différents.

Pour atteindre ces objets, la présente invention prévoit un procédé de protection contre les surcharges d'une interface entre un central téléphonique et des relais reliés à une ligne d'abonné consistant à connecter, côté ligne d'abonné par rapport aux relais, un dispositif de protection unique dont le fonctionnement est paramétré en fonction d'un signal de commande des relais délivré par l'interface.

En d'autres termes, la présente invention prévoit un dispositif de protection contre les surcharges pour une interface entre un central téléphonique et des relais reliés à une ligne d'abonné, du type comportant, pour chaque conducteur de la ligne, au moins un moyen de commutation destiné à raccorder le conducteur à la masse en cas d'une surtension dépassant une valeur seuil, et au moins un moyen pour fixer automatiquement la valeur seuil à partir d'un signal de commande des relais.

Selon un mode de réalisation de la présente invention, le moyen pour fixer la valeur seuil comporte un commutateur monté entre une borne de commande en tension du moyen de commutation et un potentiel déterminé, ce commutateur étant commandé en fonction d'un état du signal de commande des relais délivré par l'interface.

Selon un mode de réalisation de la présente invention, le moyen de commutation comporte un thyristor monté entre le conducteur et la masse et dont la gâchette est reliée à la masse par l'intermédiaire d'une diode à avalanche, ce commutateur configurant le moyen de commutation entre un premier mode de fonctionnement où la valeur seuil correspond à la tension d'avalanche de la diode et un second mode de fonctionnement où la valeur seuil correspond audit potentiel déterminé.

Selon un mode de réalisation de la présente invention, le commutateur comporte un transistor commandé à partir de l'état du signal de commande des relais.

Selon un mode de réalisation de la présente invention, le dispositif comporte, pour chaque conducteur, un premier module de protection contre une surtension positive et un deuxième module de protection contre une surtension négative, chaque module comportant un commutateur associé à un moyen de commutation.

Selon un mode de réalisation de la présente invention, le potentiel déterminé associé au commutateur du premier module est la masse, le potentiel déterminé associé au commutateur du deuxième module correspondant au potentiel batterie de l'interface.

Selon un aspect de la présente invention, un système de protection contre les surcharges d'une interface (1) entre un central téléphonique et des relais reliés à une ligne d'abonné, comporte, entre la ligne et les relais, un dispositif unique de protection tel que ci-dessus

Selon un aspect de la présente invention, un système de protection contre les surcharges de deux circuits raccordés à au moins un conducteur par l'intermédiaire d'au moins un relais comporte, entre le conducteur et le relais, un dispositif de protection comportant deux moyens de commutation commandés en tension et destinés à raccorder le conducteur à un potentiel de référence en cas d'une surtension dépassant une de deux valeurs seuils délimitant une plage de fonctionnement associé à un desdits circuits ; et deux moyens pour fixer automatiquement chacune des valeurs seuils en fonction d'un signal de commande dudit relais.

Selon un mode de réalisation de la présente invention, chaque moyen pour fixer une valeur seuil comporte un commutateur reliant une borne de commande du moyen de commutation auquel il est associé à un potentiel déterminé, la borne de commande étant également reliée à la masse par l'intermédiaire d'une diode à avalanche.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
les figures 1, 2A et 2B décrites précédemment sont destinées à exposer l'état de la technique et le problème posé ;
la figure 3 représente, sous forme de schéma-blocs, un mode de réalisation d'un système de protection selon la présente invention ;
la figure 4 représente partiellement et schématiquement un premier mode de réalisation d'un dispositif de protection selon l'invention adapté au système de la figure 3 ;
la figure 5 représente partiellement un schéma électrique détaillé d'un premier mode de réalisation d'un dispositif de protection selon l'invention ; et
la figure 6 représente partiellement un schéma électrique détaillé d'un deuxième mode de réalisation d'un dispositif de protection selon l'invention.

Pour des raisons de clarté, les mêmes éléments ont été désignés par les mêmes références aux différentes figures.

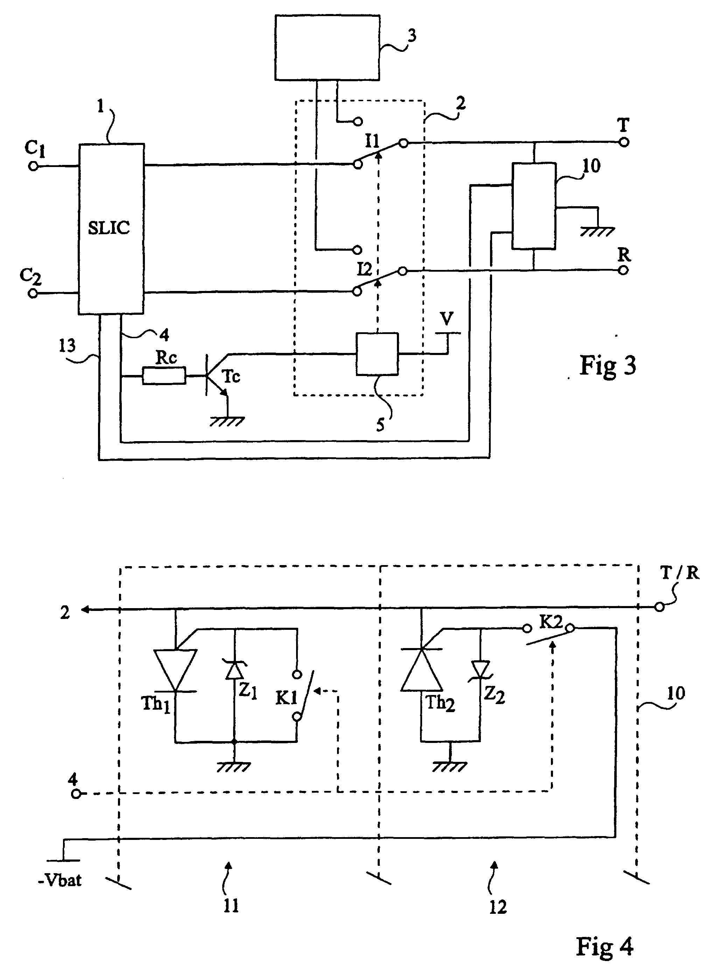

La figure 3 représente un premier mode de réalisation d'un système de protection selon l'invention.

Une caractéristique de la présente invention est de prévoir un dispositif de protection 10 unique à la fois pour un circuit SLIC 1 et pour un générateur de sonnerie 3. La figure 3 représente le même type de schéma que celui de la figure 1 mais dans lequel les dispositifs de protection classiques 6 et 7 (figure 1) ont été remplacés par le seul dispositif de protection 10 selon la présente invention.

Comme précédemment, un circuit 2 comportant des relais de sonnerie I1 et I2 commandés par des bobines ou autres circuits de détection et de commande est connecté, d'une part, à la ligne d'abonné (conducteurs T et R), d'autre part, à l'interface SLIC 1 et au générateur de sonnerie 3.

Une caractéristique de la présente invention est que le dispositif de protection 10 possède deux modes de fonctionnement selon la position des relais I1 et I2. La sélection du mode de fonctionnement du dispositif 10 est effectuée au moyen du signal de commande du circuit 2, délivré par le circuit 1, par une première borne de sortie 4.

Le dispositif 10 est placé entre le circuit 2 et la ligne de manière à éliminer les surcharges provenant de la ligne téléphonique avant que celles-ci arrivent aux relais I1 et I2. Le dispositif de protection de l'invention protège donc également le circuit de relais 2 ce qui permet désormais d'utiliser des relais statiques.

La figure 4 représente, schématiquement, un premier mode de réalisation partiel du dispositif 10. A la figure 4, seule une moitié du dispositif 10 destinée à assurer une protection contre des surcharges sur un des conducteurs T ou R a été représentée, le dispositif de protection 10 complet comprenant deux montages tels que représentés à la figure 4, respectivement associés aux conducteurs T et R.

Selon l'invention, le dispositif de protection 10 comprend, pour chaque conducteur R ou T, un module 11 destiné aux surtensions positives et un module 12 destiné aux surtensions négatives.

Le module 11 comporte un thyristor Th1 à gâchette d'anode monté entre le conducteur T ou R et la masse. La gâchette du thyristor Th1 est également reliée à la masse par l'intermédiaire d'une première diode à avalanche Z1.

Une caractéristique de la présente invention est qu'un premier commutateur K1 est monté en parallèle sur la diode Z1 et est commandé par le signal 4 de commande du circuit de relais 2.

Le rôle du commutateur K1 est de fixer un potentiel déterminé de déclenchement de la protection en court-circuitant la diode à avalanche Z1 lorsque les relais I1 et I2 (figure 3) établissent un contact entre la ligne et l'interface 1 (mode parole) afin que le thyristor Th1 conduise dès qu'une tension positive apparaît sur le conducteur T ou R.

En mode sonnerie, c'est-à-dire lorsque les relais I1 et I2 mettent en contact les conducteurs T et R avec le générateur de sonnerie 3, le commutateur K1 est ouvert et le thyristor Th1 associé à la diode à avalanche Z1 fonctionne comme dans le dispositif classique représenté à la figure 2A.

Le module 12 comporte un thyristor Th2 à gâchette de cathode monté entre le conducteur T ou R et la masse. La gâchette du thyristor Th2 est également reliée à la masse par l'intermédiaire d'une diode à avalanche Z2.

Une caractéristique de la présente invention est que le module 12 comporte un deuxième commutateur K2 entre la gâchette du thyristor Th2 et un potentiel négatif -Vbat, déterminé pour correspondre au seuil de tension négative de protection de l'interface 1, c'est-à-dire à la tension batterie -Vbat.

Le commutateur K2 a pour rôle de forcer le potentiel de la gâchette du thyristor Th2 au potentiel -Vbat lorsque les relais I1 et I2 assurent le contact entre la ligne et l'interface SLIC 1 (mode parole). Le potentiel -Vbat est obtenu en reliant une borne du commutateur K2 à la tension batterie présente sur la carte d'abonné, par exemple, sur une deuxième borne de sortie 13 de l'interface SLIC 1. Ainsi, en mode parole, la protection agit dès que le potentiel sur la ligne T ou R est plus négatif que - Vbat. Selon l'invention, le commutateur K2 est commandé, comme le commutateur K1, par le signal 4.

En mode sonnerie, le commutateur K2 est ouvert et le module 12 fonctionne de même la manière que le circuit classique exposé en relation avec la figure 2A.

Chaque commutateur K1 ou K2 constitue donc un moyen pour fixer automatiquement le potentiel de déclenchement du module, respectivement 11 ou 12, auquel il est associé à partir de l'état du signal de commande des relais I1 et I2. Une première valeur du potentiel de déclenchement correspond à la tension d'avalanche de la diode, respectivement Z1 ou Z2, et une deuxième valeur correspond au potentiel déterminé, respectivement 0 ou -Vbat, auquel est raccordé le commutateur, respectivement, K1 ou K2.

Ainsi, le dispositif de protection 10 selon l'invention est paramétrable entre les deux modes de fonctionnement (parole et sonnerie). De plus, la sélection du mode de fonctionnement s'effectue selon l'invention automatiquement au moyen du signal de commande disponible au niveau de l'interface SLIC et destiné, comme dans les circuits classiques, à la commande du circuit de relais 2.

Un avantage de la présente invention est que, au moyen d'un dispositif de protection unique, elle assure une protection contre des surtensions provenant de la ligne, à la fois de l'interface SLIC 1, du générateur de sonnerie 3 et du circuit de relais 2.

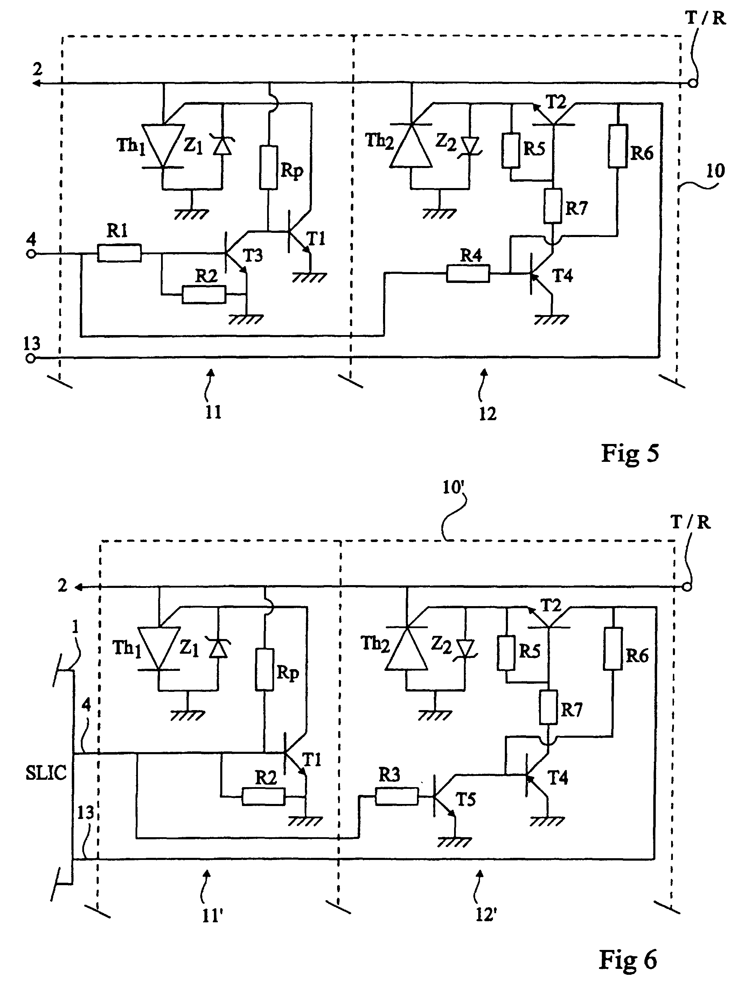

Les figures 5 et 6 représentent, respectivement, deux modes de réalisation détaillés du dispositif de protection selon l'invention. Un premier mode de réalisation représenté à la figure 5 correspond à une réalisation pratique du dispositif de protection pour un système tel que représenté à la figure 3, c'est-à-dire où le transistor de commande Tc et la résistance de commande Rc du circuit de relais 2 sont externes à l'interface SLIC 1. Un deuxième mode de réalisation représenté à la figure 6 est destiné à un cas où le circuit SLIC intègre le transistor de commande Tc et la résistance Rc et délivre donc, sur sa sortie 4, un signal de commande qui se trouve inversé par rapport au premier mode de réalisation.

Dans le premier mode de réalisation représenté à la figure 5, le commutateur K1 est constitué d'un transistor bipolaire NPN T1 dont l'émetteur est relié à la masse et dont le collecteur est relié à la gâchette du thyristor Th1. La base du transistor T1 est reliée au collecteur d'un transistor NPN T3 ainsi qu'au conducteur T ou R par l'intermédiaire d'une résistance de protection Rp. Le transistor T3 reçoit sur sa base, par l'intermédiaire d'une résistance R1, le signal de commande issu de la borne 4 de l'interface SLIC 1. L'émetteur du transistor T3 est relié à la masse ainsi que, par l'intermédiaire d'une résistance R2, à sa base. Le rôle des résistances R1 et R2 est de polariser le transistor T3.

Dans le mode de réalisation représenté à la figure 5, on suppose que le signal de commande délivré par la borne 4 est dans un état bas (0 volt) en mode parole et dans un état haut (5 volts) en mode sonnerie.

En mode sonnerie, le transistor T3 reçoit un courant de base à travers la résistance R1 et est donc saturé. Le transistor T1 est donc bloqué dans la mesure où sa base est à un niveau de zéro volt. Ceci correspond à l'état ouvert du commutateur K1.

En mode parole, le transistor T3 est bloqué et la base du transistor T1 reçoit donc du courant lorsque la tension sur le conducteur T ou R est positive. Ainsi, dès que la tension sur le conducteur T ou R devient positive, le transistor T1 sature et élimine ainsi toute surtension positive. La résistance de protection Rp du transistor T1 est choisie pour que ce transistor soit saturé.

A titre d'exemple particulier de réalisation, on pourra choisir pour les résistances R1 et R2 des valeurs de 1 kΩ et pour la résistance R3 une valeur de 10 kΩ.

Le commutateur K2 du module 12 est constitué d'un transistor bipolaire de type NPN T2 dont l'émetteur est relié à la gâchette du thyristor Th2 et dont le collecteur est relié à la borne 13 délivrant la tension -Vbat. La base du transistor T2 est reliée par une résistance R7 au collecteur d'un transistor bipolaire PNP T4 dont l'émetteur est à la masse et dont la base est reliée à la borne 4 par l'intermédiaire d'une résistance R4. La base du transistor T2 est également reliée à son émetteur par l'intermédiaire d'une résistance R5 et la base du transistor T4 est reliée au collecteur du transistor T2 par l'intermédiaire d'une résistance R6.

En mode sonnerie, la jonction base-émetteur du transistor T4 se trouve polarisée en inverse dans la mesure où la borne 4 est à un potentiel positif. Le transistor T4 est donc bloqué et le transistor T2 se trouve donc également bloqué à l'aide de la résistance R5. Ceci correspond à l'état ouvert du commutateur K2.

En mode parole, le transistor T4 se trouve polarisé au moyen des résistances R4 et R6 et est donc saturé. Ainsi, un courant circule dans la base du transistor T2 qui sature également. Ceci correspond à l'état formé du commutateur K2.

La valeur de la résistance R5 est choisie pour permettre le blocage du transistor T2 en mode sonnerie. Les résistances R4 et R6 qui constituent un pont diviseur de tension de polarisation du transistor T4 sont choisies pour que leur point milieu (base du transistor T4) soit à un potentiel inférieur à -0,6 volt lorsque la borne 4 est à un potentiel nul et pour que la base du transistor T4 soit à un potentiel supérieur à -0,6 volt lorsque la borne 4 est à un potentiel correspondant à son autre état (par exemple 5 volts).

A titre d'exemple particulier de réalisation, la résistance R4 est d'une valeur de 100 Ω, la résistance R5 est d'une valeur de 1 MΩ et la résistance R6 est d'une valeur de 4,7 kΩ.

Les transistors T1 (module 11) et T2 (module 12) sont choisis pour supporter une tension au moins égale à la tension d'avalanche des diodes Z1 et Z2. Cette condition n'est pas nécessaire pour le transistor T3 (module 11) dans la mesure où le transistor T3 ne voit que la tension de commande de la borne 4.

Dans la description qui précède, on a négligé l'influence des chutes de tension base-émetteur et des chutes de tension résistives sur la commutation des thyristors Th1 et Th2 en cas de surtension.

La figure 6 représente un deuxième mode de réalisation détaillé du dispositif de protection 10 pour le cas où le transistor de commande Tc et la résistance Rc sont intégrés au circuit d'interface SLIC 1 et que sa borne 4 délivre un signal de commande qui est dans un état bas en mode sonnerie et dans un état haut en mode parole.

Dans ce cas, le transistor T3 du module 11 de la figure 5 n'est plus nécessaire et la résistance R2 du module 11' (figure 6) est directement montée sur le transistor T1. Pour le module 12', il faut par contre inverser le signal délivré par la borne 4 de l'interface 1. Pour ce faire, une résistance R3 et un transistor bipolaire NPN T5 sont intercalés entre la borne 4 et la base du transistor T4. L'émetteur du transistor T5 est relié à la masse tandis que son collecteur est relié à la base du transistor T4. La base du transistor T5 est reliée à la borne 4 par l'intermédiaire de la résistance R3.

Le fonctionnement du mode de réalisation représenté à la figure 6 se déduit du fonctionnement exposé en relation avec la figure 5.

Bien entendu, la présente invention est susceptible de diverses variantes et modifications qui apparaîtront à l'homme de l'art. En particulier, le choix des valeurs des résistances est fonction des tensions de fonctionnement du système de protection. De même, les différents transistors bipolaires pourront le cas échéant être remplacés par des transistors MOS.

En outre, l'invention s'applique également à tout système dans lequel des circuits sont raccordés à un ou plusieurs conducteurs par l'intermédiaire de relais et pour lesquels les seuils de protection sont différents pour chaque circuit. On notera que, dans de telles applications, la référence de tension peut ne pas être la masse mais un potentiel positif ou négatif. De plus, n'importe quel module 11 ou 12 peut être prévu pour fonctionner de façon symétrique ou dissymétrique entre deux conducteurs. En outre, le nombre de conducteurs protégés n'est pas nécessairement deux mais peut être quelconque.

## Revendications

1. Procédé de protection contre les surcharges d'une interface (1) entre un central téléphonique et des relais (I1, I2) reliés à une ligne d'abonné (T, R), **caractérisé en ce qu'**il consiste à connecter, côté ligne d'abonné par rapport aux relais (I1, I2), un dispositif de protection unique (10) dont le fonctionnement est paramétré en fonction d'un signal de commande des relais (I1, I2) délivré par l'interface (1).

2. Dispositif de protection contre les surcharges pour une interface (1) entre un central téléphonique et des relais (I1, I2) reliés à une ligne d'abonné (T, R), du type comportant, pour chaque conducteur (T, R) de la ligne, au moins un moyen de commutation (Th1-Z1 ; Th2-Z2) destiné à raccorder le conducteur (T, R) à la masse en cas d'une surtension dépassant une valeur seuil, **caractérisé en ce qu'**il comporte au moins un moyen (K1 ; K2) pour fixer automatiquement ladite valeur seuil à partir d'un signal de commande des relais (I1, I2) délivré par l'interface (1).

3. Dispositif de protection selon la revendication 2, **caractérisé en ce que** ledit moyen pour fixer la valeur seuil comporte un commutateur (K1 ; K2) monté entre une borne de commande en tension du moyen de commutation (Th1-Z1 ; Th2-Z2) et un potentiel déterminé (0 ; -Vbat), ledit commutateur (K1 ; K2) étant commandé en fonction d'un état dudit signal de commande des relais (I1, I2) délivré par l'interface (1).

4. Dispositif de protection selon la revendication 3, **caractérisé en ce que** ledit moyen de commutation (Th1-Z1 ; Th2-Z2) comporte un thyristor (Th1 ; Th2) monté entre le conducteur (T, R) et la masse et dont la gâchette est reliée à la masse par l'intermédiaire d'une diode à avalanche (Z1 ; Z2), ledit commutateur (K1 ; K2) configurant ledit moyen de commutation (Th1-Z1 ; Th2-Z2) entre un premier mode de fonctionnement où ladite valeur seuil correspond à la tension d'avalanche de ladite diode (Z1 ; Z2) et un second mode de fonctionnement où ladite valeur seuil correspond audit potentiel déterminé (0 ; -Vbat).

5. Dispositif de protection selon la revendication 3 ou 4, **caractérisé en ce que** ledit commutateur (K1 ; K2) comporte un transistor (T1 ; T2) commandé à partir de l'état du signal de commande des relais (I1, I2).

6. Dispositif de protection selon l'une quelconque des revendications 3 à 5, **caractérisé en ce qu'**il comporte, pour chaque conducteur (T, R), un premier module (11, 11') de protection contre une surtension positive et un deuxième module (12, 12') de protection contre une surtension négative, chaque module (11, 11' ; 12, 12') comportant un commutateur (K1 ; K2) associé à un moyen de commutation (Th1-Z1 ; Th2-Z2).

7. Dispositif de protection selon la revendication 6, **caractérisé en ce que** le potentiel déterminé associé au commutateur (K1) du premier module (11, 11') est la masse, le potentiel déterminé associé au commutateur (K2) du deuxième module (12, 12') correspondant au potentiel batterie (-Vbat) de l'interface (1).

8. Système de protection contre les surcharges d'une interface (1) entre un central téléphonique et des relais (I1, I2) reliés à une ligne d'abonné (T, R), **caractérisé en ce qu'**il comporte, entre la ligne (T, R) et les relais (I1, I2), un dispositif unique de protection selon l'une quelconque des revendications 2 à 7.

9. Système de protection contre les surcharges de deux circuits (1, 3) raccordés à au moins un conducteur (T ; R) par l'intermédiaire d'au moins un relais (I1 ; I2), **caractérisé en ce qu'**il comporte, entre ledit conducteur (T ; R) et le relais (I1 ; I2), un dispositif de protection comportant :
deux moyens de commutation (Th1-Z1, Th2-Z2) commandés en tension et destinés à raccorder le conducteur (T ; R) à un potentiel de référence (0) en cas d'une surtension dépassant une de deux valeurs seuils délimitant une plage de fonctionnement associé à un desdits circuits (1, 3) ; et
deux moyens (K1, K2) pour fixer automatiquement chacune desdites valeurs seuils en fonction d'un signal de commande dudit relais (I1 ; I2).

10. Système de protection contre les surcharges selon la revendication 9, **caractérisé en ce que** chaque moyen pour fixer une valeur seuil comporte un commutateur (K1 ; K2) reliant une borne de commande du moyen de commutation (Th1-Z1 ; Th2-Z2) auquel il est associé à un potentiel déterminé (0 ; -Vbat), ladite borne de commande étant également reliée à la masse par l'intermédiaire d'une diode à avalanche (Z1 ; Z2) délivré par l'interface (1).

## Claims

1. A method for protecting against overloads an interface (1) between a telephone exchange and relays (I1, I2) connected to a subscriber line (T, R) , **characterized in that** it consists of connecting, on the side of the subscriber line with respect to the relays (I1, I2), a single protection device (10), the operation of which is parametered according to a signal for controlling the relays (I1, I2) issued by the interface (1).

2. A device for protection against overloads for an interface (1) between a telephone exchange and relays (I1, I2) connected to a subscriber line (T, R) of the type including, for each conductor (T, R) of the line, at least one switching means (Th1-Z1; Th2-Z2) for connecting the conductor (T, R) to the ground in case of an overvoltage exceeding a threshold value, **characterized in that** it includes at least one means (K1, K2) for automatically setting the threshold value based on a signal for controlling the relays (I1, I2), issued by the interface (1) .

3. A protection device according to claim 2, **characterized in that** the means for setting the threshold value. includes a switch (K1; K2) mounted between a voltage control terminal of the switching means (Th1-Z1; Th2-Z2) and a determined potential (0, -Vbat), the switch (K1; K2) being controlled according to a state of the signal for controlling the relays (I1, I2) issued by the interface (1).

4. A protection device according to claim 3, **characterized in that** the switching means (Th1-Z1; Th2-Z2) includes a thyristor (Th1; Th2) mounted between the conductor (T, R) and the ground and the gate of which is connected to the ground via an avalanche diode (Z1; Z2), the switch (K1; K2) configuring the switching means (Th1-Z1; Th2-Z2) between a first operating mode where the threshold value corresponds to the avalanche voltage of the diode (Z1; Z2) and a second operating mode where the threshold value corresponds to the determined potential (0; -Vbat).

5. A protection device according to claim 3 or 4, **characterized in that** said switch (K1; K2) includes a transistor (T1; T2) controlled based on the state of the signal for controlling the relays (I1, I2).

6. A protection device according to any of claims 3 to 5, **characterized in that** it includes, for each conductor (T, R), a first unit (11, 11') for protection against a positive overvoltage and a second unit (12, 12') for protection against a negative overvoltage, each unit (11, 11'; 12, 12') including a switch (K1; K2) associated with a switching means (Th1-Z1; Th2-Z2).

7. A protection device according to claim 6, **characterized in that** the determined potential associated with the switch (K1) of the first unit (11, 11') is the ground, the determined potential associated with the switch (K2) of the second unit (12, 12') corresponding to the battery potential (-Vbat) of the interface (1).

8. A system for protecting against overloads an interface (1) between a telephone exchange and relays (11, 12) connected to a subscriber line (T, R) **characterized in that** it includes, between the line (T, R) and the relays (I1, I2), a single protection device according to any of claims 2 to 7.

9. A system for protecting against overloads two circuits (1, 3) connected to at least one conductor (T, R) via at least one relay (I1, I2) **characterized in that** it includes, between the conductor (T, R) and the relay (I1, I2), a protection device including:
two voltage-controlled switching means (Th1-Z1; Th2-Z2) for connecting the conductor (T, R) to a reference potential (0) in case of an overvoltage exceeding one out of two threshold values defining an operating range associated with one of the circuits (1, 3); and
two means (K1, K2) for automatically setting each of the threshold values according to a signal for controlling the relay (I1, I2).

10. A system for protection against overloads according to claim 9, **characterized in that** each means for setting a threshold value includes a switch (K1, K2) connecting a control terminal of the switching means (Th1-Z1; Th2-Z2) associated therewith to a determined potential (0, -Vbat), the control terminal being also connected to the ground via an avalanche diode (Z1, Z2) issued by the interface (1).

## Patentansprüche

1. Verfahren zum Überlastschutz einer Schnittstelle (Interface) (1) zwischen einem Fernsprechamt und mit einer Teilnehmerleitung (T, R) verbundenen Relais (I1,I2), **dadurch gekennzeichnet, daß** das Verfahren darin besteht, auf der Seite der Teilnehmerleitung bezogen auf die Relais (I1, I2) eine einzige Schutzvorrichtung (10) anzuschließen, deren Funktionsparameter in Abhängigkeit von einem von der Schnittstelle (Interface) (1) gelieferten Steuersignal für die Relais (I1, I2) bestimmt werden.

2. Überlast-Schutzvorrichtung für eine Schnittstelle (Interface) (1) zwischen einem Fernsprechamt und mit einer Teilnehmerleitung (T, R) verbundenen Relais (I1, I2), vom Typ, welcher für jeden Leiter (T, R) der Teilnehmerleitung wenigstens ein Umschalt-bzw. Kommutationsmittel (Th1-Z1 ; Th2 - Z2) aufweist, um den Leiter (T, R) im Falle einer einen Schwellwert übersteigenden Überspannung mit Masse zu verbinden, **dadurch gekennzeichnet, daß** die Vorrichtung wenigstens ein Mittel (K1; K2) aufweist, um den genannten Schwellwert ausgehend von einem durch die Schnittstelle (Interface) (1) gelieferten Steuersignal für die Relais (I1, I2) automatisch festzulegen.

3. Schutzvorrichtung nach Anspruch 2, **dadurch gekennzeichnet, daß** das Mittel zum Festlegen des Schwellwerts einen zwischen einem Spannungssteueranschluß des Umschalt-bzw. Kommutationsmittels (Th1 - Z1; Th2 - Z2) und einem bestimmten Potential (0 ; -Vbat) angeordneten Umschalter bzw. Kommutator (K1 ; K2) aufweist, und daß dieser Umschalter in Abhängigkeit von einem Zustand des genannten, von der Schnittstelle (1) gelieferten Steuersignals für die Relais (I1, I2) gesteuert wird.

4. Schutzvorrichtung nach Anspruch 3, **dadurch gekennzeichnet, daß** das genannte Umschalt- bzw. Kommutationsmittel ( Th1 - Z1 ; Th2 - Z2) einen zwischen dem Leiter (T,R) und Masse liegenden Thyristor (Th1 ; Th2) aufweist, dessen Gate mit Masse über eine Lawinendurchbruch- bzw. Zenerdiode (Z1 ; Z2) verbunden ist, und daß der genannte Umschalter (K1 ; K2) das genannte Umschalt- bzw. Kommutationsmittel (Th1 - Z1 ; Th2 - Z2) konfiguriert, und zwar zwischen einem ersten Betriebs- bzw. Funktionsmode, bei welchem der genannte Schwellwert der Lawinendurchbruchspannung der genannten Diode (Z1 ; Z2) entspricht, und einem zweiten Betriebs- bzw. Funktionsmode, bei welchem der genannte Schwellwert dem genannten bestimmten Potential (0 ; -Vbat) entspricht.

5. Schutzvorrichtung nach Anspruch 3 oder 4 , **dadurch gekennzeichnet, daß** der genannte Umschalter bzw. Kommutator (K1 ; K2) einen Transistor (T1 ; T2) aufweist, der ausgehend von dem Zustand des Steuersignals für die Relais (I1 , I2) gesteuert wird.

6. Schutzvorrichtung nach einem der Ansprüche 3 bis 5, **dadurch gekennzeichnet, daß** sie für jeden Leiter (T , R) einen ersten Schutzmodul (11 , 11') zum Schutz gegen eine positive Überspannung und einen zweiten Schutzmodul (12, 12') zum Schutz gegen eine negative Überspannung aufweist, wobei jeder Modul (11 , 11'; 12 , 12') einen einem Umschalt- bzw. Kommutationsmittel (Th1 - Z1 ; Th2 - Z2) zugeordneten Umschalter bzw. Kommutator (K1 ; K2) aufweist.

7. Schutzvorrichtung nach Anspruch 6, **dadurch gekennzeichnet, daß** das dem Umschalter bzw. Kommutator (K1) des ersten Moduls (11 , 11') zugeordnete bestimmte Potential die Masse ist und daß das dem Umschalter bzw. Kommutator (K2) des zweiten Moduls (12, 12') zugeordnete bestimmte Potential dem Batteriepotential (-Vbat) der Schnittstelle (1) entspricht.

8. System zum Überlastschutz einer Schnittstelle (Interface) ( 1 ) zwischen einem Fernsprechamt und mit einer Teilnehmerleitung (T , R) verbundenen Relais (I1 , I2), **dadurch gekennzeichnet, daß** das System zwischen der Teilnehmerleitung (T , R) und den Relais (I1 , I2) eine einzige Schutzvorrichtung gemäß einem der Ansprüche 2 bis 7 aufweist.

9. System zum Überlastschutz von zwei Schaltungen (1 , 3) , die mittels wenigstens einem Relais (I1 ; I2) mit wenigstens einem Leiter (T ; R) verbunden sind, **dadurch gekennzeichnet, daß** es zwischen dem genannten Leiter ( T ; R) und dem Relais (I1 ; I2) eine Schutzvorrichtung aufweist, welche umfaßt :
zwei spannungsgesteuerte Umschalt - bzw. Kommutationsmittel (Th1 - Z1, Th2 - Z2) mit der Zweckbestimmung, im Falle einer Überspannung, welche einen von zwei Schwellwerten übersteigt, die einen einer der genannten Schaltungen (1, 3) zugeordneten Betriebsbereich begrenzen, den Leiter (T ; R) mit einem Bezugspotential (0) zu verbinden;
sowie zwei Mittel (K1 , K2) zur automatischen Festlegung jedes der genannten Schwellwerte in Abhängigkeit von einem Steuersignal für das genannte Relais (I1 ; I2).

10. System zum Überlastschutz nach Anspruch 9, **dadurch gekennzeichnet daß** jedes Mittel zur Festlegung eines Schwellwerts einen Umschalter bzw. Kommutator (K1;K2) aufweist, welcher einen Steueranschluß des Umschalt-bzw. Kommutationsmittels (Th1 -Z1 ; Th2 - Z2 ), dem er zugeordnet ist, mit einem bestimmten Potential (0 ; -Vbat) verbindet, wobei der genannte Steueranschluß vermittels einer durch die Schnittstelle (1) gelieferten Lawinendurchbruch- bzw. Zenerdiode (Z1 ; Z2) auch mit Masse verbunden ist.
